(19) Europäisches Patentamt
European Patent Office
Office européen des brevets

(11) Publication number: **0 202 435**
**B1**

# (12) EUROPEAN PATENT SPECIFICATION

(45) Date of publication of patent specification: **08.11.89**

(51) Int. Cl.⁴: **A 01 N 43/54,** A 01 N 65/00

(21) Application number: **86104412.1**

(22) Date of filing: **01.04.86**

## (54) Granular bait compositions for the control of ants.

(30) Priority: **15.04.85 US 723401**

(43) Date of publication of application:
**26.11.86 Bulletin 86/48**

(45) Publication of the grant of the patent:
**08.11.89 Bulletin 89/45**

(84) Designated Contracting States:
**AT BE CH DE FR GB IT LI LU NL SE**

(56) References cited:
**FR-A-1 162 045**
**US-A-4 320 130**
**US-A-4 353 907**

(73) Proprietor: **AMERICAN CYANAMID COMPANY**
**1937 West Main Street P.O. Box 60**
**Stamford Connecticut 06904-0060 (US)**

(72) Inventor: **Suzuki, Munehiro**
**Mitsubishi-Mansion 604 42, Otsuka Muro-cho**
**Toyohashi-shi Aichi Pref., 440 (JP)**
Inventor: **Kimpara, Masaomi**
**298 Nakajima-cho**
**Hamamatsu-shi Shizuoka Pref., 430 (JP)**
Inventor: **Tsuda, Kiyoshi Hagashitaniyama-Sun Heights 202**
**18-1 Higashitaniyama 3-chome**
**Kagoshima-shi Kogoshima Pref. 891-01 (JP)**

(74) Representative: **Wächtershäuser, Günter, Dr.**
**Tal 29**
**D-8000 München 2 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 202 435 B1

**Description**

The present invention relates to insecticidal granular bait compositions useful for the control of ants containing tetrahydro-5,5-dimethyl-2-(1*H*)-pyrimidinyl-{3-[4-(trifluoro-methyl)phenyl]-1-{-2-[4-(trifluoro-methyl)phenyl]ethenyl}-2-propenylidene}hydrazone or fatty acid salts thereof as the toxicant and ground pupa of silkworm as the attractant. The insecticide which is active as a stomach poison, hereinabove named, can be graphically illustrated by formula (I)

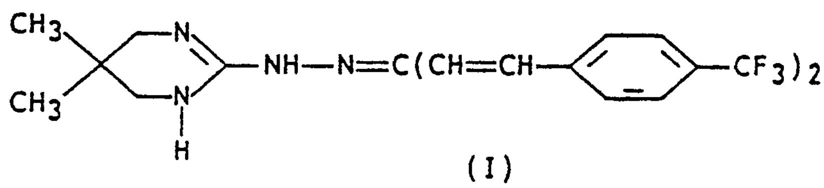

(I)

and the fatty acid salts thereof.

The insecticide is disclosed in United States Patent No. 4,163,102 and its method of use is disclosed in United States 4,213,988, all of which are incorporated herein by reference. Insecticidal bait compositions of the above-named insecticide are disclosed in United States Patent No. 4,320,130, which describes solid corn based baits which are suitable for application over large areas for the control of insects.

The composition may contain from 0.5% to 5% of the formula (I) insecticide and 95% to 99.5% dry pupa of silkworms.

A preferred embodiment of the invention is compositions comprising on a weight basis 15% to 70% dry pupa of silkworms, 0.5% to 5% of the formula (I) insecticide, 0.0% to 5.0% of a fatty acid such as oleic acid and 29.5% to 75.0% of a solid and/or liquid carrier or mixture of carriers and an antimicrobial and/or an antioxidizing agent. Examples of carriers are fishmeal, powdered sugar, flour, rice bran oil, corn oil, soybean oil, corn syrup, glucose, krill and the like. These compositions are exceedingly effective for attracting a variety of ants to the bait compositions and subsequently controlling the ants.

A more preferred embodiment of the invention is compositions comprising on a weight basis 30% to 50% of dry pupa of silkworms, 0.5% to 3.0% of formula (I) insecticide, 10% to 20% fishmeal, 25% to 40% powdered sugar, 0.1% sodium salicylate, 0.2% *tert*-butylhydroquinone, and 0.1% of the sodium salt of carboxymethylcellulose.

Pupa of silkworms, is a byproduct of the silk industry obtained during the isolation of silk.

Compositions of the invention may readily be prepared by grinding the dry pupa by conventional methods to maximize the yield of 10 to 60 mesh particles, which is preferred.

A solution of the formula (I) insecticide or a fatty acid salt thereof such as the oleic acid salt, in an appropriate solvent such as corn oil, rice oil, or soybean oil may then be sprayed onto the tumbling dry pupa particles. Additional edible carriers such as fishmeal, sugars, and flour, may then be added and the mixture blended until homogeneous. Optionally antimicrobial agents such as sodium salicylate, sodium dehydroacetate and sodium benzoate may be added to inhibit microorganism growth or antioxidants such as *tert*-butylhydroquinone, n-propyl gallate, 3-*tert*-butyl-4-hydroxy anisole, and butylated hydroxytoluene may be incorporated during the blending of the compositions to improve the storage characteristics of the final compositions, as can other agents such as thickening agents and the like.

The invention includes a method for controlling ants comprising applying in the vicinity of their habitat or infested area a granular insecticidal bait composition comprising tetrahydro-5.5-dimethyl-2-(1*H*)-pyrimidinyl-{-3-]4-trifluoromethyl)phenyl]-1-{-2-[4-trifluoromethyl)phenyl]ethenyl}-2-propenylidene}hydrazone having the formula (I) or fatty acid salts thereof and ground dry pupa of silkworms.

The invention is further illustrated by the following non-limiting examples.

Example 1

Attractiveness of various edible compositions

A filter paper, 15 cm in diameter, is placed close to the nest of *Monomorium pharaonis*. Six to seven of each 0.2 g of the bait compositions are placed on the filter paper along the circumference. The number of ants carrying the baits during five minutes after treatment are recorded using indications of −, ±, +, ++, +++, ++++. The quantity of baits remaining after 24 hours are weighed and also recorded. The results of these experiments which are summarized in Table I below demonstrate the effectiveness of the compositions of the invention for attracting these ants.

TABLE I
Attractant/Carrier Evaluation

| Bait attractant/carrier | Ants carrying during 5 min | Bait remaining after 24 hours |
|---|---|---|
| Ground dry pupa of silkworm | ++++ | 0 |
| Blood meal | – | most remained |
| Bone meal | – | most remained |
| Soybeans | – | most remained |
| Fishmeal | ++ | half remained |
| Corn grits | – | most remained |
| Meat extract | – | most remained |
| Flour | – | most remained |
| Ground krill | – | most remained |
| Dried daphnia | + | 2/3 remained |
| Dried shrimp | – | most remained |
| Cheese | + | half remained |
| 10% Honey + Fishmeal | + | 1/2 remained |
| 10% Sugar + Fishmeal | + | 2/3 remained |
| 1% Eugenol + Fishmeal | ± | most remained |
| 0.1% Carbitol + Fishmeal | ± | most remained |
| 10% Carbitol + Fishmeal | – | most remained |
| 5% Malic acid + Fishmeal | ± | most remained |
| 5% Citric acid + Fishmeal | + | 3/4 remained |
| 5% Succinic acid + Fishmeal | ± | most remained |
| 5% Tartaric acid + Fishmeal | – | most remained |
| 5% Benzoic acid + Fishmeal | ± | most remained |
| 5% Sodium citrate + Fishmeal | – | most remained |
| 5% Sodium succinate + Fishmeal | – | most remained |
| 5% Sodium tartrate + Fishmeal | ± | most remained |
| 4.6% Sodium glutamate + 0.4% Sodium inosinate + Fishmeal | ++ | half remained |
| 4.6% Sodium glutamate + 0.4% Sodium inosinate + Corn grits | – | most remained |
| 2% Yellow dye + Fishmeal | ± | most remained |

TABLE I (continued)

| Bait attractant/carrier | Ants carrying during 5 min | Bait remaining after 24 hours |
|---|---|---|
| 5% Meat extract + Fishmeal | ++ | half remained |
| 1% Eugenol + Corn grits | − | most remained |
| 1% Carbitol + Corn grits | − | most remained |
| 70% Ground dry pupa of silkworm + 30% Fishmeal | ++++ | 0 |
| 70% Ground dry pupa of silkworm + 30% sugar | ++++ | 0 |

Example 2

Preparation of granular insecticidal bait compositions

Ten kg of dry pupa of silkworm is ground using a rotary disc type grinder and screened using 10 and 60 mesh screens. A solution of 373.5 g composed of 25% tetrahydro-5,5-dimethyl-2(1*H*)-pyrimidinyl-{3-[4-(trifluoromethyl)phenyl]-1-{2-[4-(trifluoromethyl)phenyl]ethenyl{-2-propenylidene}hydrazone, 25% oleic acid and 50% corn oil is sprayed onto the tumbling pupa, and the mixture blended until homogeneous.

Example 3

Preparation of granular bath composition

The ingredients listed in Table II below totaling 100 g are placed in a mortar and blended well. Then the mixture is chopped using chopper in which straight blade is rotating to maximize 10 to 60 mesh particle size. The product is collected using screens to give the granular bait compositions listed in Table II.

TABLE II
Granular Insecticidal Bait Compositions

| Composition No. | Active ingredient | Attractants/carriers | % | Anti-oxidant | Anti-microbial agent |
|---|---|---|---|---|---|
| 1 | tetrahydro-5,5-dimethyl-2(1*H*)-pyrimidinyl-{3-[4-(trifluoromethyl)phenyl)-1-{2-[4-(trifluoromethyl)phenyl]ethenyl}-2-propenylidene}hydrazone | Dry pupa of silkworm<br>Fishmeal<br>Powdered sugar<br>Flour<br>Rice bran oil | 55.0<br>20.0<br>16.9<br>3.0<br>4.0 | *tert*-butyl hydroquinone 0.1% | Na-salcylate 0.1% |
| 2 | tetrahydro-5,5-dimethyl-(2*H*)-pyrimidinyl-{3-[4-(trifluoromethyl)phenyl-1-{2-[4-(trifluoromethyl)phenyl]ethenyl}-2-propenylidene}-hydrazone | Dry pupa of silkworm<br>Fishmeal<br>Powdered sugar<br>Flour<br>Rice bran oil | 18.0<br>50.0<br>2.7<br>2.1<br>2.0 | 0 | 0 |
| 3 | tetrahydro-5,5-dimethyl-2(1*H*)-pyrimidinyl-{3-[4-(trifluoromethyl)phenyl-1-{2-[4-trifluoromethyl)phenyl]-ethenyl}-2-propenylidene}hydrazone | Dry pupa of silkworm<br>Fishmeal<br>Flour<br>Oleic acid | 70.0<br>25.1<br>20.0<br>3.0 | 0 | 0 |
| 4 | tetrahydro-5,5-dimethyl-2-(1*H*)-pyrimidinyl-{3-[4-(trifluoromethyl)phenyl-1-{2-[4-trifluoromethyl)phenyl]-ethenyl}-2-propenylidene}hydrazone | Dry pupa of silkworm<br>Krill powder<br>Flour<br>Oleic acid | 70.0<br>25.1<br>2.0<br>2.0 | 0 | 0 |

TABLE II (continued)

| Composition No. | Active ingredient | Attractants/carriers | % | Anti-oxidant | Anti-microbial agent |
|---|---|---|---|---|---|
| 5 | tetrahydro-5,5-dimethyl-2(1*H*)-pyrimidinyl-{3-[4-(trifluoromethyl)phenyl-1-{2-[4-(trifluoromethyl)phenyl]-ethenyl}-2-propenylidene}hydrazone | Dry pupa of silkworm<br>Glucose<br>Flour<br>Oleic acid | 70.0<br>15.1<br>12.1<br>2.0 | 0 | 0 |
| 6 Control | tetrahydro-5,5-dimethyl-2(1*H*)-pyrimidinyl-{3-[4-(trifluoromethyl)phenyl--1-{2-[4-(trifluoromethyl)phenyl]-ethenyl}-2-propenylidene}hydrazone | Corn grit | 99.1 | 0 | 0 |

Example 4

Effectiveness of granular insecticidal bait compositions

A filter paper, 3 cm in diameter containing 0.5 g of the granular insecticidal bait compositions prepared in Examples 2 and 3 is placed close to the nests of various ant species. The baits are examined one day after placement and the amount of bait recorded. One week after placement the area surrounding each treatment is examined for the presence of ants in the vicinity of the treated area recorded.

The results of these experiments which are summarized in Table III below demonstrate the effectiveness of granular insecticidal bait compositions according to the invention.

Results comparable to those obtained for compositions 1 are also obtained using the antioxidants n-propyl gallate, 3-*tert*-butyl-4-hydroxy anisole and dibutyl hydroxy toluene or the antimicrobial agent sodium dehydroacetate.

TABLE III
Evaluation of Granular Bait Compositions

| Composition | Ant species | Lasius nigar | Pheidole nodus | Tetramorium caespitum | Monomorium pharaonis |
|---|---|---|---|---|---|
| Example 2 | Bait remaining (one day) | 0 | 0 | 0 | 0 |
| | ants observed | disappeared | disappeared | disappeared | disappeared |
| Example 3—1 | Bait remaining (one day) | 0 | | 0 | 0 |
| | ants observed | disappeared | — | disappeared | disappeared |
| Example 3—2 | Bait remaining (one day) | 0 | | 0 | 0 |
| | ants observed | disappeared | — | disappeared | disappeared |
| Example 3—3 | Bait remaining (one day) | 0 | 0 | 0 | 0 |
| | ants observed | disappeared | disappeared | disappeared | disappeared |
| Example 3—4 | Bait remaining (one day) | 0 | 0 | 0 | 0 |
| | ants observed | disappeared | disappeared | disappeared | disappeared |
| Example 3—5 | Bait remaining (one day) | 0 | 0 | 0 | 0 |
| | ants observed | disappeared | disappeared | disappeared | disappeared |

**Claims**

1. A granular insecticidal bait composition comprising 0.5% to 5% tetrahydro-5,5-dimethyl-2-(1*H*)-pyrimidinyl-{3-[4-(trifluoromethyl)phenyl]-1-{2-[4-(trifluoromethyl)-phenyl]ethenyl}-2-propenylidene}-hydrazone having the formula (I)

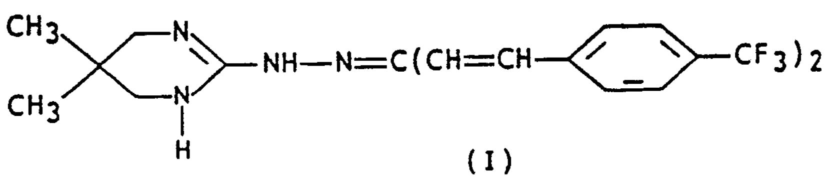

(I)

or fatty acid salt thereof and 95% to 99.5% ground dry pupa of silkworms.

2. A composition according to Claim 1 comprising on a weight basis 15% to 70% dry pupa of

silkworms, 0.5% to 5% of the formula (I) insecticide, 0.0% to 5.0% of oleic acid, 29.5% to 75% of a solid or liquid carrier, and 0% to 0.5% of an antimicrobial or antioxidizing agent.

3. A composition according to Claim 2 wherein the carrier is an edible carrier of fishmeal, powdered sugar, flour, krill, corn grits, corn syrup, rice oil, corn oil, soybean oil or glucose or mixtures thereof.

4. A composition according to Claim 3 wherein the carrier is fishmeal.

5. A composition according to Claim 3 containing 0.1% by weight sodium salicylate or sodium benzoate or 0.1% by weight *tert*-butylhydroquinone or butylated hydroxytoluene.

6. A composition according to Claim 3 comprising on a weight basis 30% to 50% of dry pupa of silkworms, 0.5% to 3.0% of the formula (I) insecticide, 10% to 20% fishmeal, 25% to 40% powdered sugar, 0.1% sodium salicylate, 0.2% *tert* butylhydroquinone and 0.1% of the sodium salt of carboxymethylcellulose.

7. A method for controlling ants comprising applying in the vicinity of their habitat or infested area a granular insecticidal bait composition comprising 0.5% to 5% tetrahydro-5,5-dimethyl-2-(1*H*)-pyrimidinyl-{-3-[4-trifluoromethyl)phenyl]-1-{2-[4-(trifluoromethyl)phenyl]ethenyl}-2-propenylidene}hydrazone having the formula (I)

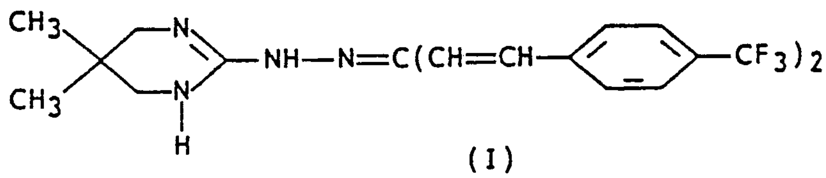

(I)

or fatty acid salt thereof and 95% to 99.5% ground dry pupa of silkworms.

8. A method according to Claim 7 consisting essentially of applying a composition comprising on a weight basis 15% to 70% dry pupa of silkworms, 0.5% to 5% of the formula (I) insecticide, 0.0% to 5.0% of oleic acid, 29.5% to 75% of a solid or liquid carrier and 0.% to 0.5% of an antimicrobial or antioxidizing agent.

9. A method according to Claim 8 wherein the edible carrier is fishmeal, powdered sugar, flour, krill, corn grits, corn syrup, rice oil, corn oil, soybean oil, or glucose or mixtures thereof.

10. A method according to Claim 9 wherein the carrier is fishmeal.

11. A method according to Claim 9 wherein the composition contains 0.1% by weight sodium salicylate or sodium benzoate or 0.1% by weight *tert*-butylhydroquinone or butylated hydroxytoluene.

12. A method according to Claim 8 comprising on a weight basis 30% to 50% of dry pupa of silkworms, 0.5% to 3.0% of the formula (I) insecticide, 10% to 20% fishmeal, 25% to 40% powdered sugar, 0.1% sodium salicylate, 0.2% *tert* butylhydroquinone, and 0.1% of the sodium salt of carboxymethylcellulose.

**Patentansprüche**

1. Granulatförmige insektizide Lockfutterzusammensetzung, umfassend 0,5% bis 5% Tetrahydro - 5,5 - dimethyl - 2 - (1H) - pyrimidinyl - {3 - [4 - (trifluormethyl)phenyl] - 1 - {2 - [4 - (trifluormethyl) - phenyl]ethenyl} - propenyliden}hydrazon mit der Formel (I)

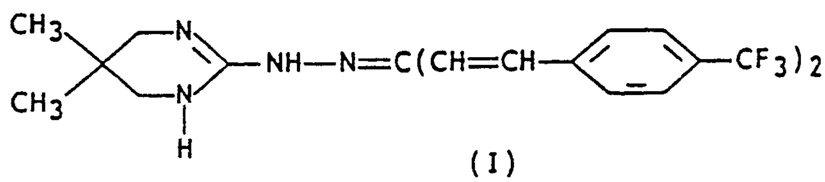

(I)

oder dessen Fettsäuresalz und 95% bis 99,5% gemahlene, trokkene Seidenraupenpuppen.

2. Zusammensetzung gemäß Anspruch 1, umfassend auf Gewichtsbasis 15% bis 70% tockene Seidenraupenpuppen, 0,5 bis 5% des Insektizids der Formel (I), 0,0% bis 5,0% Ölsäure, 29,5% bis 75% eines festen oder flüssigen Trägers und 0% bis 0,5% eines antimikrobiellen oder antioxidierenden Mittels.

3. Zusammensetzung gemäß Anspruch 2, wobei der Träger ein eßbarer Träger aus Fischmehl, Puderzucker, Mehl, Krill, Maisschnitzeln, Maissirup, Reisöl, Maissöl, Sojabohnenöl oder Glukose oder Mischungen derselben ist.

4. Zusammensetzung gemäß Anspruch 3, wobei der Träger Fischmehl ist.

5. Zusammensetzung gemäß Anspruch 3, enthaltend 0,1 Gew.% Natriumsalicylat oder Natriumbenzoat und 0,1 Gew.-% tert-Butylhydrochinon oder butyliertes Hydroxytoluol.

6. Zusammensetzung gemäß Anspruch 3, umfassend auf Gewichtsbasis 30% bis 50% trockene Seidenraupenpuppen, 0,5% bis 3,5% des Insektizids der Formel (I), 10% bis 20% Fischmehl, 25% bis 40%

Puderzucker, 0,1% Natriumsalicylat, 0,2% tert-Butylhydrochinon und 0,1% des Natriumsalzes von Carboxymethylcellulose.

7. Verfahren zur Bekämpfung von Ameisen, wobei man in der Nähe ihres Lebensraums oder in dem befallenden Gebiet eine granulatförmige insektizide Lockfutterzusammensetzung appliziert, umfassend 0,5% bis 5% Tetrahydro-5,5-dimethyl-2-(1H)-pyrimidinyl-{3-[4-(trifluormethyl)phenyl]-1-{2-[4-(trifluormethyl)-phenyl]ethenyl}-propenyliden}hydrazon mit der Formel (I)

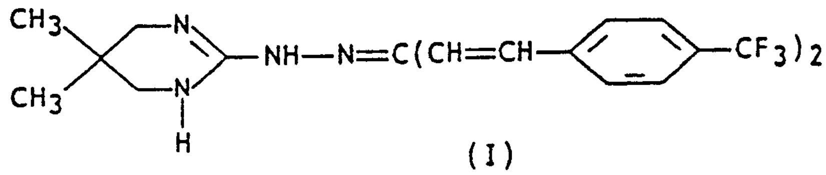

(I)

oder dessen Fettsäuresalz und 95% bis 99,5% gemahlene, trokkene Seidenraupenpuppen.

8. Verfahren gemäß Anspruch 7, bestehend im wesentlichen aus der Applikation einer Zusammensetzung, umfassend auf Gewichtsbasis 15% bis 70% trockene Seidenraupenpuppen, 0,5 bis 5% des Insektizids der Formel (I), 0,0% bis 5,0% Ölsäure, 29,5% bis 75% eines festen oder flüssigen Trägers und 0% bis 0,5% eines antimikrobiellen oder antioxidierenden Mittels.

9. Verfahren gemäß Anspruch 8, wobei der eßbare Träger Fischmehl, Puderzucker, Mehl, Krill, Maisschnitzel, Maissirup, Reisöl, Maisöl, Sojabohnenöl oder Glukose oder Mischungen derselben ist.

10. Verfahren gemäß Anspruch 9, wobei der Träger Fischmehl ist.

11. Verfahren gemäß Anspruch 9, wobei die Zusammensetzung 0,1 Gew.-% Natriumsalicylat oder Natriumbenzoat oder 0,1 Gew.-% tert-Butylhydrochinon oder butyliertes Hydroxytoluol enthält.

12. Verfahren gemäß Anspruch 8, umfassend auf Gewichtsbasis 30% bis 50% trockene Seidenraupenpuppen, 0,5% bis 3,0% des Insektizids der Formel (I), 10% bis 20% Fischmehl, 25% bis 40% Puderzucker, 0,1% Natriumsalicylat, 0,2% tert-Butylhydrochinon und 0,1% des Natriumsalzes von Carboxymethylcellulose.

**Revendications**

1. Composition d'appât insecticide granulaire, comprenant de 0,5% à 5% de tétrahydro - 5,5 - diméthyl - 2 - (1*H*) - pyrimidinyl - {3 - [4 - trifluorométhyl)phényl] - 1 - { - 2 - [4 - (trifluoro - méthyl)-phényl]éthényl} - 2 - propénylidène}hydrazone correspondant à la formule (I)

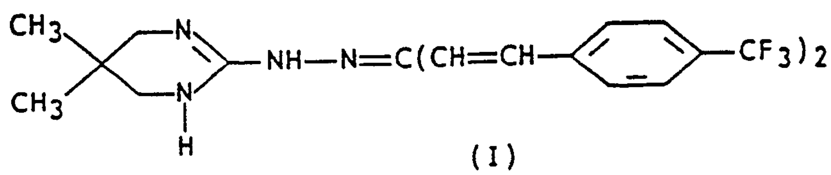

(I)

ou un sel de celle-ci avec un acide gras, et de 95% à 99,5% de pupe de ver à soie sèche broyée.

2. Composition selon la revendication 1, comprenant, en poids, de 15% à 70% de pupe de ver à soie sèche, de 0,5% à 5% de l'insecticide de formule (I), de 0,0% à 5,0% d'acide oléique, de 29,5% à 75% d'un véhicule solide ou liquide, de 0% à 0,5% d'un agent antimicrobien ou antioxydant.

3. Composition selon la revendication 2, dans laquelle le véhicule est un véhicule comestible à base de farine de poisson, de sucre en poudre, de farine, de krill, de gruaux de maïs, de sirop de maïs, d'huile de riz, d'huile de maïs, d'huile de soja, de glucose ou de mélanges de ceux-ci.

4. Composition selon la revendication 3, dans laquelle le véhicule consiste en une farine de poisson.

5. Composition selon la revendication 3, contenant 0,1% en poids de salicylate de sodium ou de benzoate de sodium, ou 0,1% en poids de *tert*-butylhydroquinone ou d'hydroxytoluène butylé.

6. Composition selon la revendication 3, comprenant, en poids, de 30% à 50% de pupe de ver à soie sèche, de 0,5% à 3,0% de l'insecticide de formule (I), de 10% à 20% de farine de poisson, de 25% à 40% de sucre en poudre, 0,1% de salicylate de sodium, 0,2% de *tert*-butylhydroquinone et 0,1% du sel de sodium de la carboxyméthylcellulose.

7. Procédé de lutte contre les fournis, dans lequel on applique, au voisinage de leur habitat ou d'une zone infestée, une composition d'appât insecticide granulaire, comprenant de 0,5 à 5% de tétrahydro - 5,5 - diméthyl - 2 - (1*H*) - pyrimidinyl - {3 - [4 - trifluorométhyl)phényl] - 1{ - 2 - [4 - (trifluorométhyl)-phényl]éthényl} - 2 - propénylidène}hydrazone, correspondant à la formule (I)

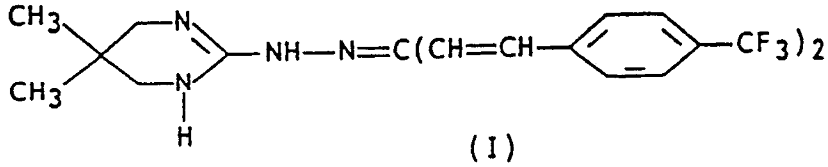

(I)

ou un sel de celle-ci avec un acide gras, et de 95% à 99,5% de pupe de ver à soie sèche.

8. Procédé selon la revendication 7, comprenant principalement les étapes consistant à appliquer une composition comprenant, en poids, de 15% à 70% de pupe de ver à soie sèche, de 0,5% à 5% de l'insecticide de formule (I), de 0,0% à 5,0% d'acide oléique, de 29,5% à 75% d'un véhicule solide ou liquide, et de 0% à 0,5% d'un agent antimicrobien ou antioxydant.

9. Procédé selon la revendication 8, dans lequel le véhicule comestible, est une farine de poisson, du sucre en poudre, de la farine, du krill, des gruaux de maïs, du sirop de maïs, de l'huile de riz, de l'huile de maïs, de l'huile de soja, du glucose ou des mélanges de ceux-ci.

10. Procédé selon la revendication 9, dans lequel le véhicule consiste en une farine de poisson.

11. Procédé selon la revendication 9, dans lequel la composition contient 0,1% en poids de salicylate de sodium ou de benzoate de sodium, ou 0,1% en poids de *tert*-butylhydroquinone ou d'hydroxytoluène butylé.

12. Procédé selon la revendication 8, comprenant, en poids, de 30% à 50% de pupe de ver à soie sèche, de 0,5% à 3,0% de l'insecticide de formule (I), de 10% à 20% de farine de poisson, de 25% à 40% de sucre en poudre, 0,1% de salicylate de sodium, 0,2% de *tert*-butylhydroquinone et 0,1% du sel de sodium de la carboxyméthylcellulose.